# EUROPEAN PATENT APPLICATION

(11) **EP 3 095 592 A1**
(43) Date of publication of application: **23.11.2016**
(21) Application number: 15785038.9
(22) Date of filing: 20.03.2015
(51) Int. Cl.: B29C 67/00, B22F 3/105, B23K 26/144

(54) **WORKING NOZZLE, WORKING HEAD, WORKING DEVICE, METHOD FOR CONTROLLING WORKING NOZZLE, AND CONTROL PROGRAM**

(71) Applicant: Technology Research Association For Future Additive Manufacturing, Chuo-ku Tokyo (JP)
(72) Inventor: SASAKIMitsuo, Yokohama-shi Kanagawa 235-0017 (JP); OHNO Hiroshi, Yokohama-shi Kanagawa 235-0017 (JP)
(74) Representative: TBK
(86) International application number: PCT/JP2015/058627
(87) International publication number: WO 2016/151713

(57) **Abstract**

This specification discloses a processing nozzle for efficiently performing supply of a powder serving as a material used for processing using an energy line. The processing nozzle includes a powder ejector that ejects a powder serving as a processing material toward a molten pool formed on a process surface by an energy line. The processing nozzle further includes an adjuster that adjusts, in accordance with the shape of the molten pool, the shape and/or position of a powder spot formed by the powder ejector.

## Description

### TECHNICAL FIELD

The present invention relates to a processing nozzle, a processing head, a machining apparatus, and a control method and control program of the processing nozzle.

### BACKGROUND ART

In the above technical field, a mechanism that finely adjusts the spot position of a laser coming out of a nozzle is provided in patent literature 1.

### CITATION LIST

### PATENT LITERATURE

Patent literature 1: Japanese Patent Laid-Open No. 2011-515099

### SUMMARY OF THE INVENTION

### TECHNICAL PROBLEM

In the technique described in this literature, however, as the speed becomes higher, a molten pool formed by a laser beam is positioned more backward in the traveling direction, and a powder supplied in the forward direction is not melted, and supply of the powder cannot be performed efficiently.

The present invention enables to provide a technique of solving the above-described problem.

### SOLUTION TO PROBLEM

One aspect of the present invention provides a processing nozzle comprising: a powder ejector that ejects a powder material toward a molten pool formed on a process surface by an energy line; and an adjuster that adjusts, in accordance with a shape of the molten pool, a shape and/or position of a powder spot formed by the powder ejector.

Another aspect of the present invention provides a control method of a processing nozzle, comprising:
detecting a shape of the molten pool when performing processing by ejecting a powder material toward a molten pool formed on a process surface by an energy line; and
adjusting, in accordance with the shape of the molten pool, a shape and/or position of a powder spot formed by a powder ejector that ejects the powder material toward the molten pool.

Still other aspect of the present invention provides a control program of a processing nozzle, causing a computer to execute:
detecting a shape of the molten pool when performing processing by ejecting a powder material toward a molten pool formed on a process surface by an energy line; and
adjusting, in accordance with the shape of the molten pool, a shape and/or position of a powder spot formed by a powder ejector that ejects the powder material toward the molten pool.

### ADVANTAGEOUS EFFECTS OF INVENTION

According to the present invention, supply of a powder from a processing nozzle can be performed efficiently.

### BRIEF DESCRIPTION OF DRAWINGS

Fig. 1 is a view showing the arrangement of a processing nozzle according to the first embodiment of the present invention;
Fig. 2 is a schematic view showing the arrangement and operation of a processing nozzle according to the second embodiment of the present invention;
Fig. 3 is a view of a temperature distribution for explaining the shape of a molten pool;
Fig. 4 is a view of a temperature distribution for explaining the shape of the molten pool;
Fig. 5 is a schematic view showing the arrangement of the processing nozzle according to the second embodiment of the present invention;
Fig. 6 is a sectional view showing the arrangement of the processing nozzle according to the second embodiment of the present invention;
Fig. 7 is a bottom view showing the arrangement of the processing nozzle according to the second embodiment of the present invention;
Fig. 8 is a sectional view showing the arrangement of a processing nozzle according to the third embodiment of the present invention;
Fig. 9 is a bottom view showing the arrangement of the processing nozzle according to the third embodiment of the present invention;
Fig. 10 is a sectional view showing the arrangement of a processing nozzle according to the fourth embodiment of the present invention;
Fig. 11 is a bottom view showing the arrangement of the processing nozzle according to the fourth embodiment of the present invention;
Fig. 12 is a sectional view showing the arrangement of a processing nozzle according to the fifth embodiment of the present invention;
Fig. 13 is a bottom view showing the arrangement of the processing nozzle according to the fifth embodiment of the present invention;
Fig. 14 is a schematic view showing the arrangement and operation of a processing nozzle according to the sixth embodiment of the present invention;
Fig. 15 is a schematic view showing the arrangement of the processing nozzle according to the sixth embodiment of the present invention; and
Fig. 16 is a schematic view showing the arrangement of an optical machining apparatus according to the seventh embodiment of the present invention.

### DESCRIPTION OF THE EMBODIMENTS

A preferred embodiment(s) of the present invention will now be described in detail with reference to the drawings. It should be noted that the relative arrangement of the components, the numerical expressions and numerical values set forth in these embodiments do not limit the scope of the present invention unless it is specifically stated otherwise.

### [First Embodiment]

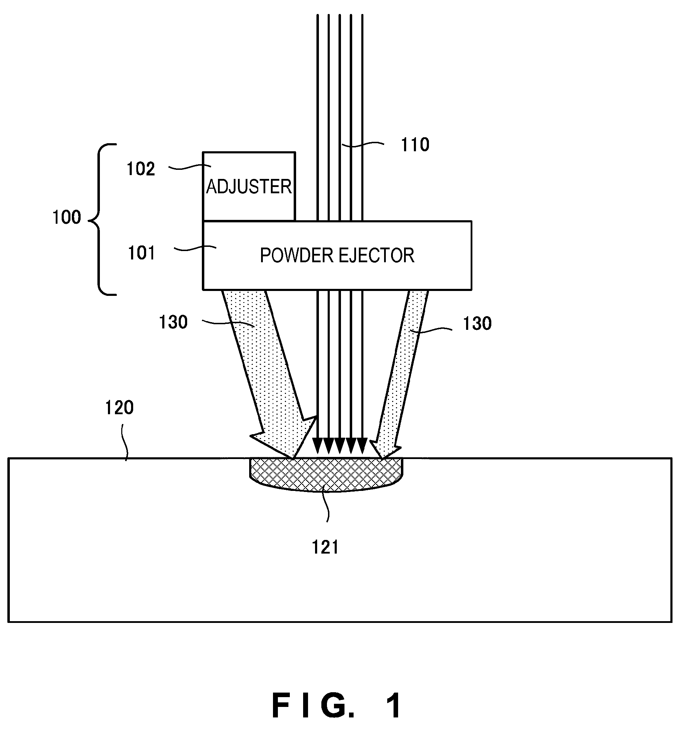

A processing nozzle 100 according to the first embodiment of the present invention will be described with reference to Fig. 1. Fig. 1 is a view showing the schematic arrangement of the processing nozzle 100 according to this embodiment. The processing nozzle 100 is a nozzle for performing processing by ejecting a powder material 130 toward a molten pool 121 formed on a process surface 120 by an energy line 110. The processing nozzle 100 includes a powder ejector 101 and an adjuster 102.

The powder ejector 101 ejects the powder material 130 toward the molten pool 121 formed on the process surface 120 by the energy line 110.

In accordance with the shape of the molten pool, the adjuster 102 adjusts the shape and/or position of a powder material ejection region (spot) formed by the powder ejector 101.

The line source of the energy line 110 is a laser source here, but can be an LED, a halogen lamp, or a xenon lamp. The energy line used to melt a material is not limited to the laser beam, and is arbitrary as long as the energy line can melt a processing material on a process surface. The energy line may be, for example, an electron beam, a microwave, or an electromagnetic wave in the ultraviolet range.

With the above-described arrangement, even when changing a shaping condition, the processing nozzle need not be replaced, and the ejection region of a powder material can be changed in accordance with a molten pool, thereby improving the processing accuracy and the material use efficiency.

### [Second Embodiment]

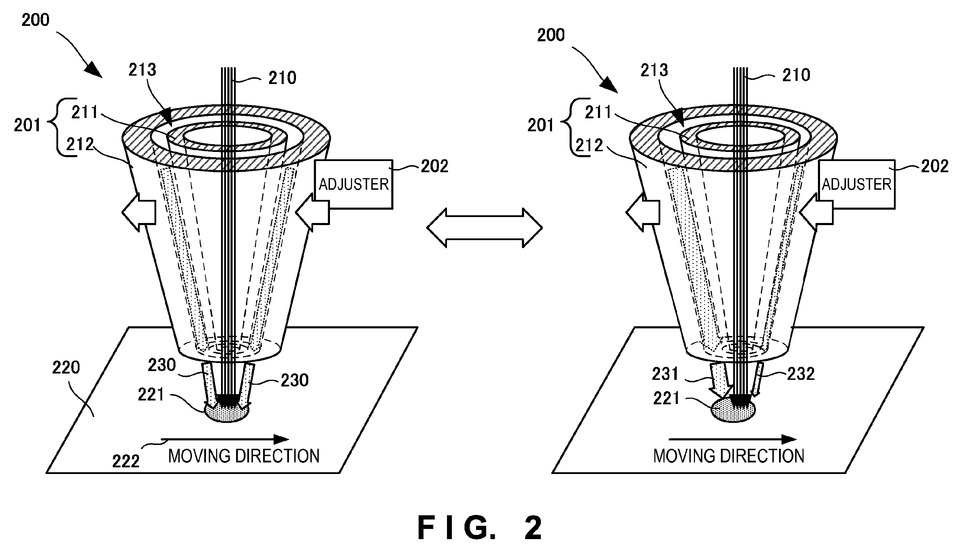

A processing nozzle 200 according to the second embodiment of the present invention will be described with reference to Fig. 2. Fig. 2 is a view for simply explaining the arrangement and operation of the processing nozzle 200 according to this embodiment.

The processing nozzle 200 is a nozzle for performing processing by ejecting a powder material 230 toward a molten pool 221 formed on a process surface 220 by a laser beam 210 serving as an energy line. The processing nozzle 200 includes a powder ejector 201 and an adjuster 202. The powder ejector 201 includes an inner housing 211 constituting a beam path through which the laser beam 210 passes, and an outer housing 212 that is arranged with respect to the inner housing 211 via a gap 213 serving as the channel of the powder material 230.

The inner housing 211 is cylindrical, and incorporates a path through which the laser beam 210 passes. The laser beam 210 comes out of one end of the inner housing 211. The outer surface of the inner housing 211 is tapered in the ejection direction of the laser beam 210. The outer housing 212 is also cylindrical, and incorporates the inner housing 211. The inner surface of the outer housing 212 is tapered in the ejection direction of the laser beam 210 coming out of the inner housing 211. This structure makes it possible to eject the powder material 230 toward the molten pool 221. The gap 213 between the outer surface of the inner housing 211 and the inner surface of the outer housing 212 forms the ejection port of the powder material 230, and the adjuster 202 changes the shape of the ejection port. Note that the downstream ends of both the inner housing 211 and outer housing 212 have a conical cylindrical shape in Fig. 2, but the present invention is not limited to this. For example, these two downstream ends may have a pyramid cylindrical shape. Alternatively, the inner housing 211 may have a circular cylindrical shape, and only the downstream end of the outer housing 212 may have a conical cylindrical shape.

The adjuster 202 adjusts the relative positions of the inner housing 211 and outer housing 212. The adjuster 202 adjusts the relative horizontal positions (positions on a plane perpendicular to the laser beam 210) of the inner housing 211 and outer housing 212. In particular, the adjuster 202 changes the state from one on the left side of Fig. 2 to one on the right side by horizontally moving (sliding) only the outer housing 212 in a direction opposite to a moving direction 222. In the molten pool 221, therefore, the amount of a powder material 231 ejected downstream in the moving direction with respect to the laser beam 210 becomes larger than that of a powder material 232 ejected upstream in the moving direction. That is, the adjuster 202 adjusts the shape and/or position of a powder spot formed by the powder ejector 201 in accordance with the moving direction 222 of the molten pool 221 on the process surface 220.

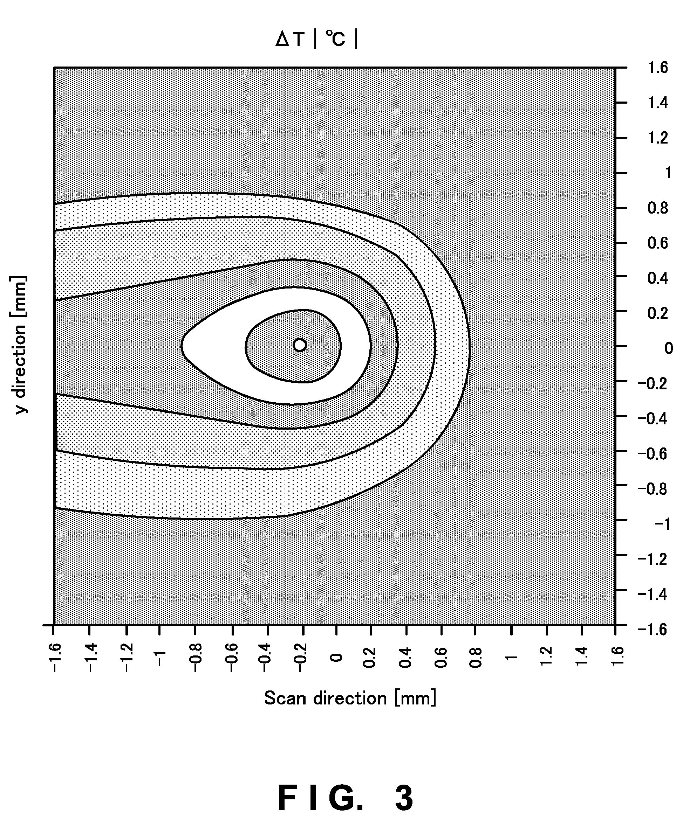

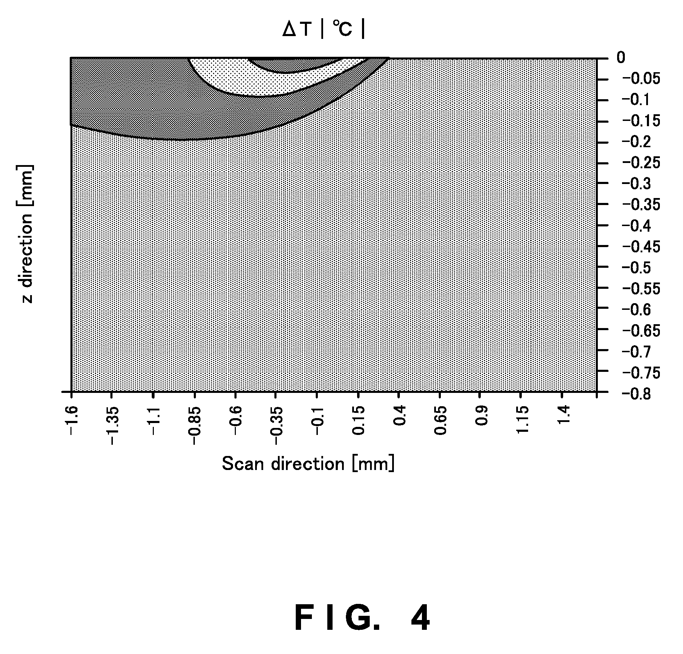

Figs. 3 and 4 each show the temperature distribution of the molten pool. In Fig. 3, the abscissa indicates the moving direction (scan direction), and the ordinate indicates the Y direction (sub-scan direction) perpendicular to the moving direction. In Fig. 4, the abscissa indicates the moving direction (scan direction), and the ordinate indicates a direction (Z direction) perpendicular to the process surface. The origin (0, 0) corresponds to the spot of a laser beam. As is apparent from these temperature distributions, the molten pool spreads downstream in the moving direction. This reveals that the powder material should be ejected in a larger amount to the downstream side in the moving direction than to the upstream side.

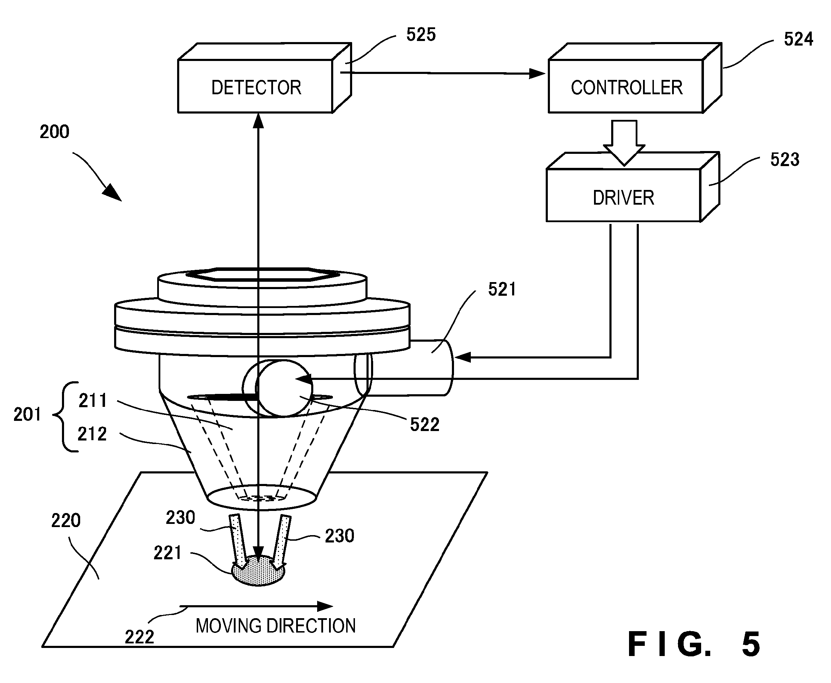

The more detailed arrangement of the processing nozzle 200 will be explained with reference to Fig. 5. As shown in Fig. 5, the processing nozzle 200 includes, as the adjuster 202, an X driving unit 521, a Y driving unit 522, a driver 523 that drives these driving units, a controller 524 that controls the driver 523, and a detector 525 that detects the shape of the molten pool 221. The detector 525 is, for example, an image capturing unit that captures an image of the process surface 220. The detector 525 detects the shape of the molten pool 221 from the captured image. The controller 524 instructs the driver 523 to move the outer housing 212 in accordance with the detected shape of the molten pool 221. In accordance with the instruction received from the controller 524, the driver 523 transmits a driving command to the X driving unit 521 and the Y driving unit 522. In this manner, the horizontal position of the outer housing 212 with respect to the inner housing 211 is changed to adjust the shape and/or position of the powder spot.

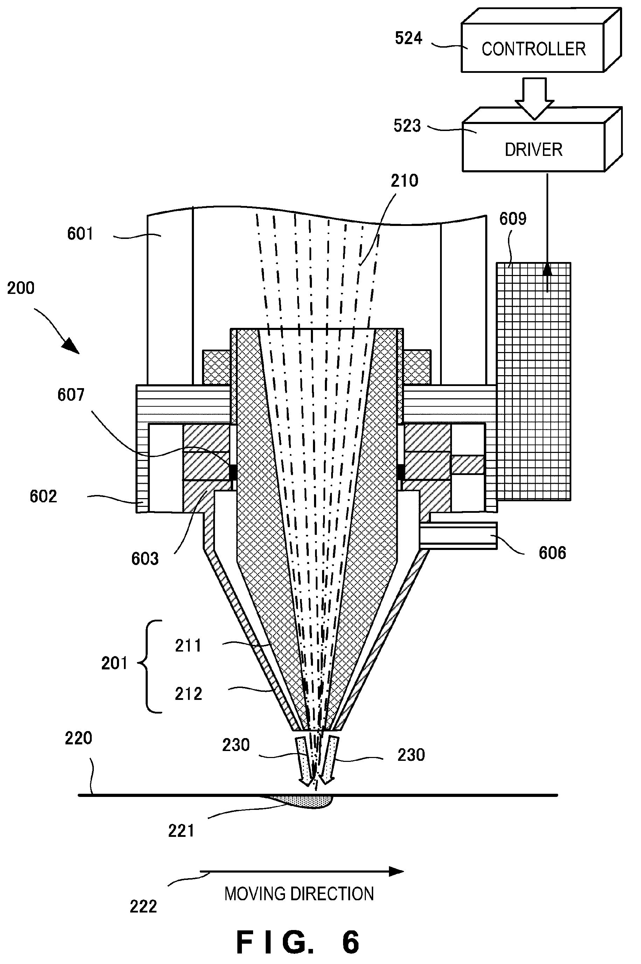

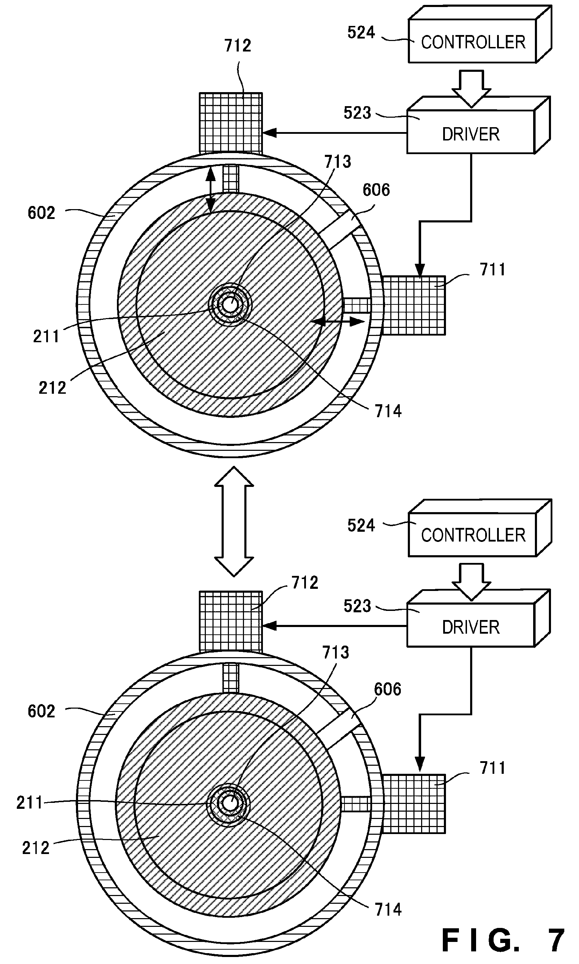

Fig. 6 is a longitudinal sectional view showing the mechanical arrangement of the processing nozzle 200. Fig. 7 is a bottom view showing the processing nozzle 200. The processing nozzle 200 is attached to a nozzle holder 602 fixed to a housing holder 601. A material supply portion 606 is provided on the outer housing 212. The inner housing 211 is fixed to the nozzle holder 602, and the outer housing 212 is movable in the horizontal direction with respect to the inner housing 211 on an X-Y stage 603. In this drawing, the processing nozzle 200 includes a driving motor 609 as the adjuster 202. A seal 607 is attached to the upper end of the outer housing 212 so that no powder material leaks from the gap between the outer housing 212 and the inner housing 211 even when the outer housing 212 moves horizontally.

As shown in Fig. 7, the processing nozzle 200 includes a driving motor 711 for the X-axis direction and a driving motor 712 for the Y-axis direction.

The driving motors 711 and 712 change the flow of a powder material by moving the X-Y stage 603 and displacing the space (nozzle gap) between the inner housing 211 and the outer housing 212. That is, the outer housing 212 can be displaced in the X and Y directions based on the indicated value of the controller 524 following the changing scan direction.

The bottom surface of the processing nozzle 200 has a laser beam exit port 713 and a powder material exit port 714. The laser beam exit port 713 is an opening at the downstream end portion of the inner housing 211. The powder material exit port 714 is a gap between the outer edge of the downstream end portion of the inner housing 211 and the inner edge of the downstream end portion of the outer housing 212.

The driving motor 711 for the X-axis direction and the driving motor 712 for the Y-axis direction change the horizontal position of the outer housing 212 with respect to the inner housing 211. Then, the shape/position of the powder material exit port 714 changes and in response to this, the shape of the powder spot also changes. For example, as shown in Fig. 7, the state changes between a state (upper view) in which the inner housing 211 and the outer housing 212 are arranged concentrically, and a state (lower view) in which they shift from each other.

According to the second embodiment, even when changing a shaping condition, the processing nozzle need not be replaced, and the ejection region of a powder material can be changed in accordance with a molten pool, thereby improving the processing accuracy and the material use efficiency.

### [Third Embodiment]

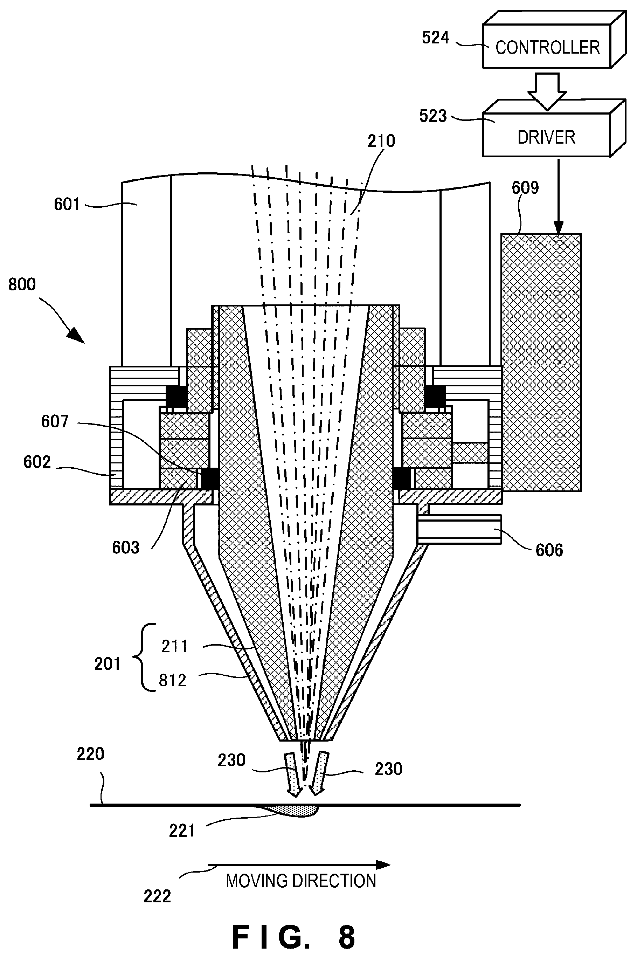

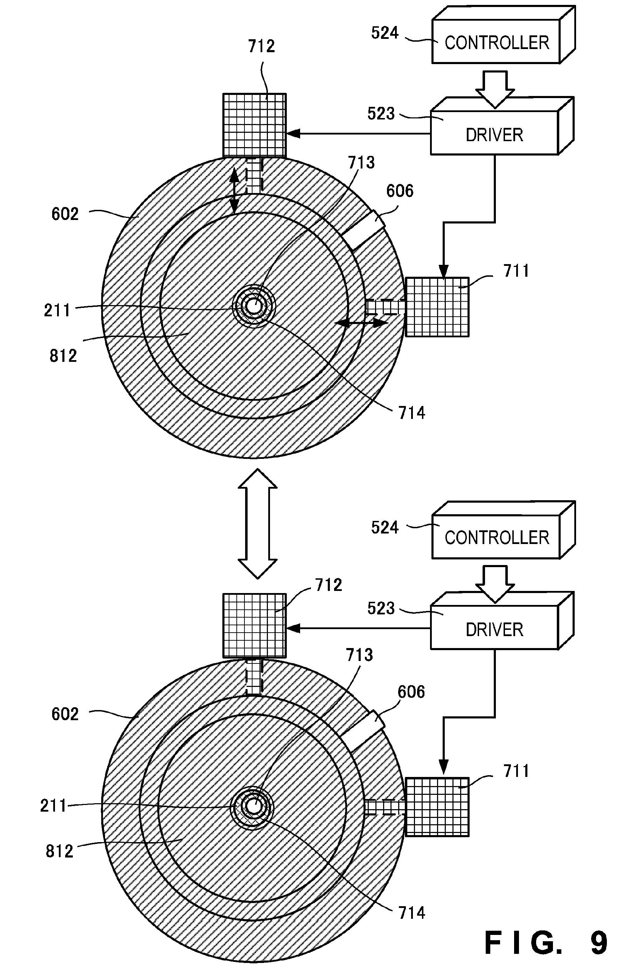

A processing nozzle 800 according to the third embodiment of the present invention will be described with reference to Figs. 8 and 9. Fig. 8 is a longitudinal sectional view for explaining the arrangement of the processing nozzle 800 according to this embodiment. Fig. 9 is a bottom view showing the processing nozzle 800. The processing nozzle 800 according to the third embodiment is different from the processing nozzle according to the second embodiment in that the processing nozzle 800 includes an outer housing 812 different in shape from the outer housing 212 and a driving motor 609 moves an inner housing 211 in the horizontal direction. The remaining arrangement and operation are the same as those in the second embodiment, so the same reference numerals denote the same arrangement and operation and a detailed description thereof will not be repeated.

According to the third embodiment, since the outer housing 812 is fixed and the inner housing 211 is moved in the horizontal direction, the arrangement of a material supply portion 606 can be simplified in comparison with the second embodiment.

### [Fourth Embodiment]

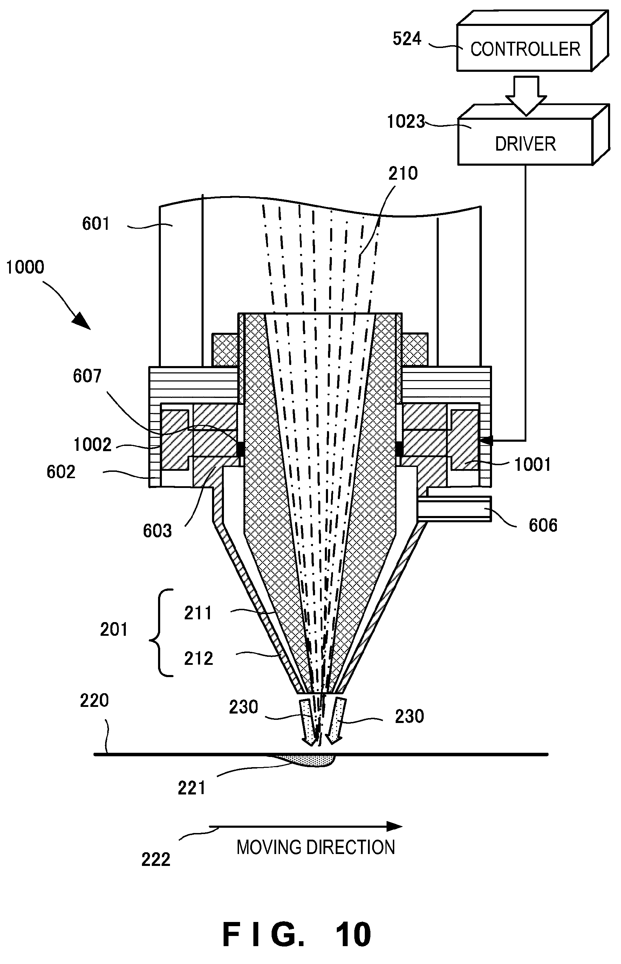

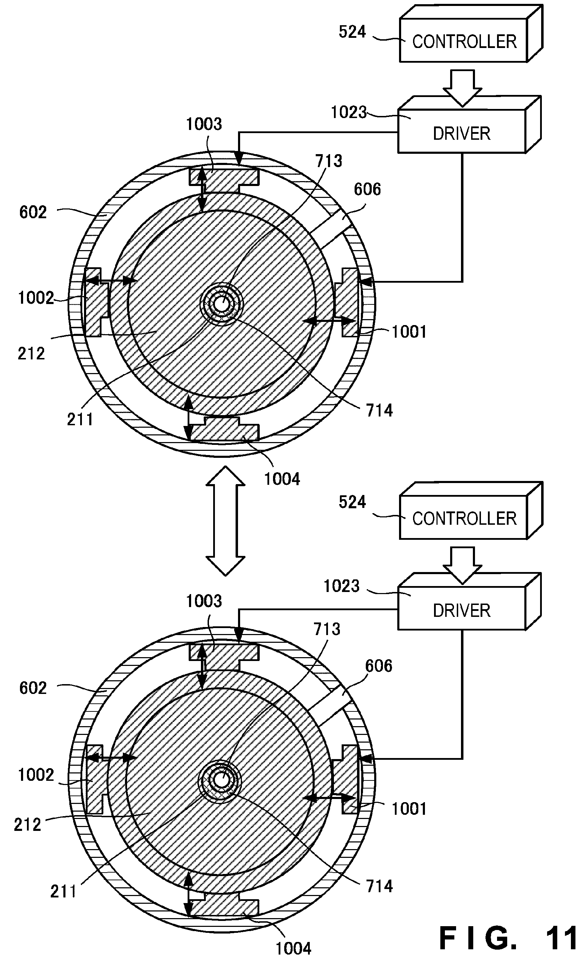

A processing nozzle 1000 according to the fourth embodiment of the present invention will be described with reference to Figs. 10 and 11. Fig. 10 is a longitudinal sectional view for explaining the arrangement of the processing nozzle 1000 according to this embodiment. Fig. 11 is a bottom view showing the processing nozzle 1000. The processing nozzle 1000 according to the fourth embodiment is different from the processing nozzle according to the second embodiment in that the processing nozzle 1000 includes four piezoelectric elements 1001 to 1004, instead of the driving motors 711 and 712, and a piezoelectric driver 1023. The remaining arrangement and operation are the same as those in the second embodiment, so the same reference numerals denote the same arrangement and operation and a detailed description thereof will not be repeated.

According to the fourth embodiment, since the piezoelectric elements 1001 to 1004 are used as the adjuster instead of the driving motors, the response characteristic of a change of the ejection region of a powder material can be enhanced, compared to the second embodiment.

### [Fifth Embodiment]

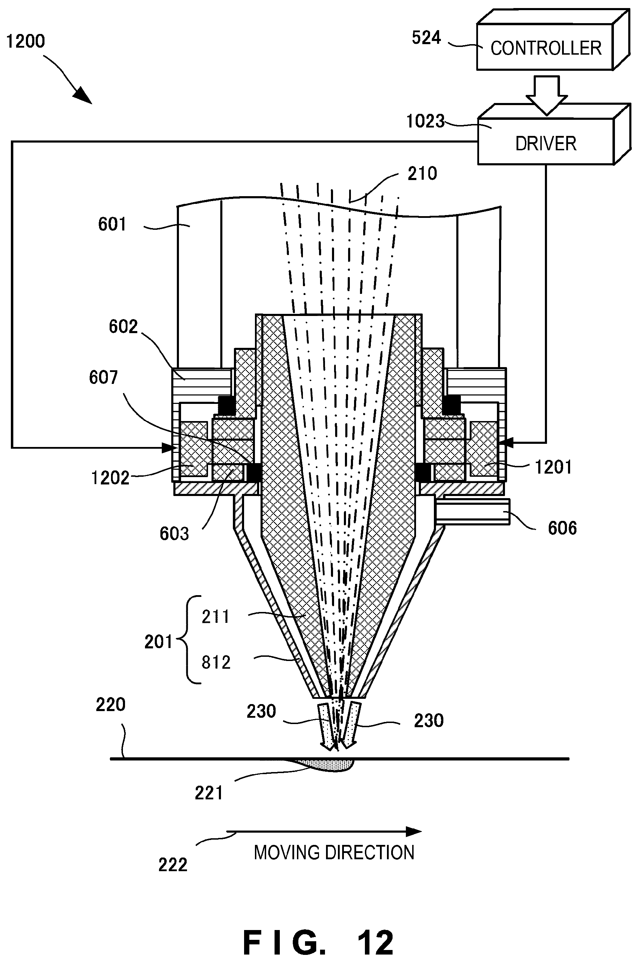

A processing nozzle 1200 according to the fifth embodiment of the present invention will be described with reference to Fig. 12. Fig. 12 is a longitudinal sectional view for explaining the arrangement of the processing nozzle 1200 according to this embodiment. The processing nozzle 1200 according to the fifth embodiment is different from the processing nozzle according to the fourth embodiment in that an inner housing 211 is moved using piezoelectric elements 1201 and 1202. The remaining arrangement and operation are the same as those in the fourth embodiment, so the same reference numerals denote the same arrangement and operation and a detailed description thereof will not be repeated.

According to the fifth embodiment, since an outer housing 812 is fixed and an inner housing 211 is moved using the piezoelectric elements 1201 and 1202, the arrangement of a material supply portion 606 can be simplified while the response characteristic of a change of the ejection region of a powder material is enhanced, compared to the second embodiment.

### [Sixth Embodiment]

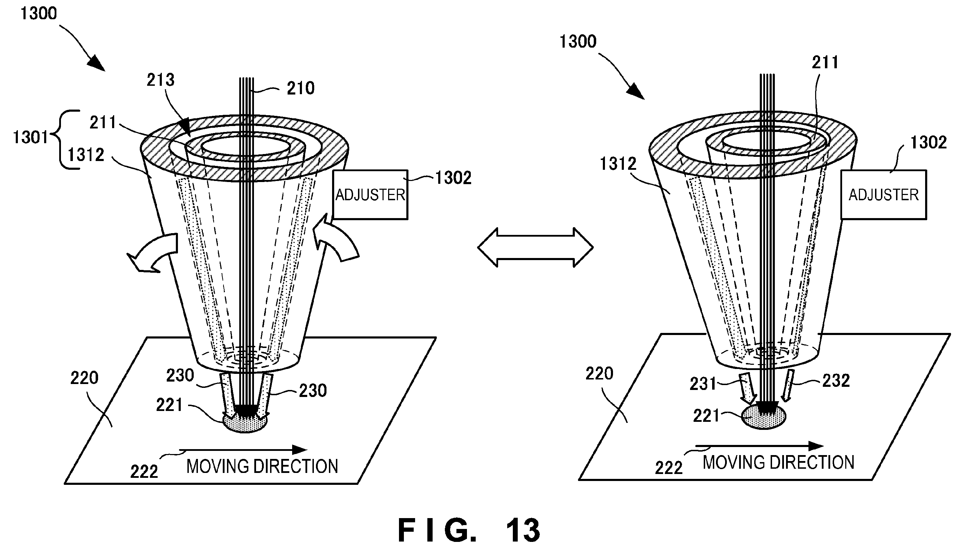

A processing nozzle 1300 according to the sixth embodiment of the present invention will be described with reference to Figs. 13 to 15. Fig. 13 is a longitudinal sectional view for explaining the arrangement of the processing nozzle 1300 according to this embodiment. The processing nozzle 1300 according to the sixth embodiment is different from the processing nozzle according to the second embodiment in that the relative angle formed by the axis of an inner housing 211 and that of an outer housing 212 is changed to change the shape of the powder exit port and thus change the shape of the powder spot. The remaining arrangement and operation are the same as those in the second embodiment, so the same reference numerals denote the same arrangement and operation and a detailed description thereof will not be repeated.

Fig. 13 is a view for simply explaining the arrangement and operation of the processing nozzle 1300 according to this embodiment.

The processing nozzle 1300 is a nozzle for performing processing by ejecting a powder material 230 toward a molten pool 221 formed on a process surface 220 by a laser beam 210 serving as an energy line. The processing nozzle 1300 includes a powder ejector 1301 and an adjuster 1302.

The powder ejector 1301 includes the inner housing 211 constituting a beam path through which the laser beam 210 passes, and an outer housing 1312 that is arranged with respect to the inner housing 211 via a gap 213.

The outer housing 1312 is also cylindrical, and incorporates the inner housing 211. The inner surface of the outer housing 1312 is tapered in the ejection direction of the laser beam 210 coming out of the inner housing 211. The gap between the outer surface of the inner housing 211 and the inner surface of the outer housing 1312 forms the ejection port of the powder material 230, and the adjuster 1302 changes the shape of the ejection port.

The adjuster 1302 adjusts the relative positions of the inner housing 211 and outer housing 1312. The adjuster 1302 adjusts the relative angle between the inner housing 211 and the outer housing 1312. In particular, the adjuster 1302 changes the state from one on the left side of Fig. 13 to one on the right side by inclining only the outer housing 1312 in a direction opposite to a moving direction 222. In the molten pool 221, therefore, the amount of a powder material 231 ejected downstream in the moving direction with respect to the laser beam 210 becomes larger than that of a powder material 232 ejected upstream in the moving direction. That is, the adjuster 1302 adjusts the shape and/or position of a powder spot formed by the powder ejector 1301 in accordance with the moving direction 222 of the molten pool 221 on the process surface 220.

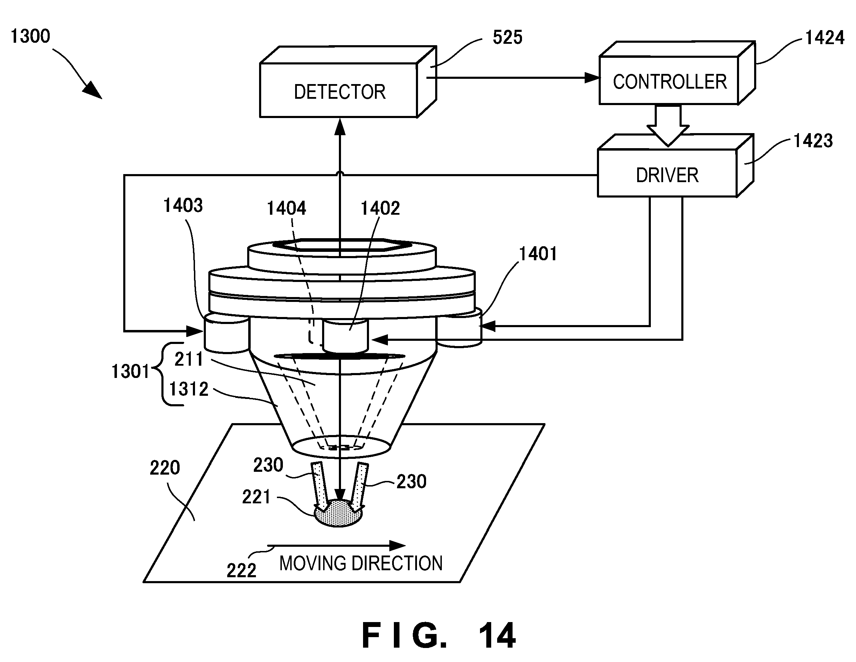

The more detailed arrangement of the processing nozzle 1300 will be explained with reference to Fig. 14. As shown in Fig. 14, the processing nozzle 1300 includes, as the adjuster 1302, Z driving units 1401 to 1404, a driver 1423 that drives these driving units, and a controller 1424 that controls the driver 1423. In this way, the angle of the outer housing 1312 with respect to the inner housing 211 is changed to adjust the shape and/or position of the powder spot.

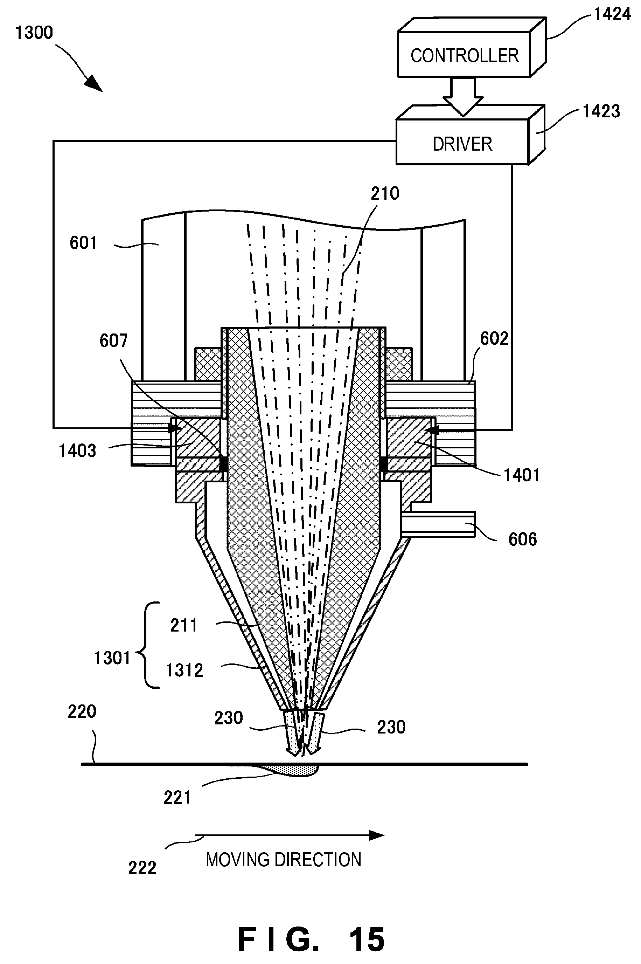

Fig. 15 is a longitudinal sectional view showing the mechanical arrangement of the processing nozzle 1300. The inner housing 211 is fixed to a nozzle holder 602, and the outer housing 1312 can be displaced with respect to the inner housing 211 in the Z direction by the Z driving units 1401 to 1404. As a result, the outer housing 1312 can be inclined with respect to the inner housing 211. As an example of the Z driving units, four piezoelectric elements are arranged. A seal 607 is attached to the upper end of the outer housing 1312 so that no powder material leaks from the gap between the outer housing 1312 and the inner housing 211 even when the outer housing 1312 is inclined.

According to the sixth embodiment, the outer housing 1312 is inclined with respect to the inner housing 211 to adjust the shape and/or position of a powder spot formed by the powder ejector 1301 in accordance with the moving direction 222 of the molten pool 221 on the process surface 220. As in the second embodiment, the ejection region of a powder material can be changed in accordance with the molten pool, thereby improving the processing accuracy and the material use efficiency.

### [Seventh Embodiment]

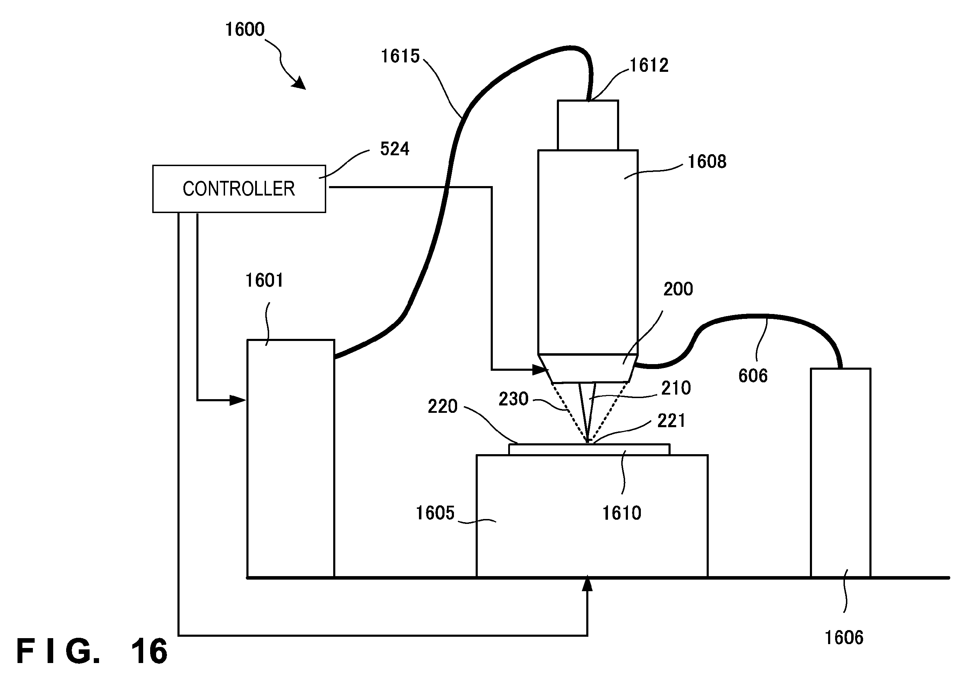

An optical machining apparatus according to the seventh embodiment of the present invention will be described with reference to Fig. 16. An optical machining apparatus 1600 is an apparatus that includes one of the processing nozzles 100, 200, 800, 1000, 1200, and 1400 explained in the above-described embodiments, and generates a three-dimensional shaped object (or overlay welding) by melting a material by heat generated by condensed light. Here, the optical machining apparatus 1600 including a processing nozzle 200 will be explained as an example.

### «Apparatus Arrangement»

The optical machining apparatus 1600 includes a light source 1601, a light transmitting portion 1615, a stage 1605, a material storage device 1606, a material supply portion 606, a processing head 1608, and a controller 524.

The light source 1601 is a laser source here, but can be an LED, a halogen lamp, or a xenon lamp. The energy line used to melt a material is not limited to the laser beam, and is arbitrary as long as the energy line can melt a powder material on a process surface. The energy line may be, for example, an electron beam, a microwave, or an electromagnetic wave in the ultraviolet range.

The light transmitting portion 1615 is, for example, an optical fiber having a core diameter of φ0.01 to 1 mm, and guides light generated by the light source 1601 to the processing head 1608.

The stage 1605 is, for example, an X stage, an X-Y stage, or an X-Y-Z stage. The respective X-, Y-, and Z-axes can be driven.

The material storage device 1606 supplies a material-containing carrier gas to the processing head 1608 via a material supply portion 606. The material is, for example, a particle such as a metal particle or a resin particle. The carrier gas is an inert gas and can be, for example, argon gas, nitrogen gas, or helium gas. The material supply portion 606 is, for example, a resin or metal hose, and guides, to the processing nozzle 200, a powder flow prepared by mixing a material in a carrier gas. However, when the material is a wire, no carrier gas is necessary.

The processing head 1608 incorporates a condensing device that condenses light serving as the energy line. The processing nozzle 200 is attached downstream of the condensing device. A laser beam supplied to the processing head 1608 is adjusted to be condensed on a process surface 220 through an optical system formed from a lens provided inside and the like. The optical system is provided to be able to control the condensing position by controlling the lens interval or the like.

Although not shown, the optical machining apparatus 1600 may include an orientation control mechanism and position control mechanism that control the orientation and position of the processing head 1608. In this case, the process region on the process surface is moved by changing the orientation and position of the processing head 1608. However, the present invention is not limited to this, and the process region on the process surface may be moved by changing the orientation and position of the stage 1605 while fixing the processing head 1608.

A controller 524 receives shaping conditions such as fine writing/bold writing and the shape of a shaped object, and changes the output value of a laser beam from the light source 1601, the position and orientation of the processing head 1608, the position of the stage 1605, and the like in accordance with the received shaping conditions. In addition, the controller 524 changes the mechanical arrangement of the processing nozzle 200 and changes the powder spot shape. Accordingly, the powder spot diameter of a powder material ejected from the processing nozzle 200 can be controlled in accordance with the molten pool diameter.

### «Apparatus Operation»

Next, the operation of the optical machining apparatus 1600 will be explained. A shaped object 1610 is created on the stage 1605. Light emitted by the processing head 1608 is condensed to the process surface 220 on the shaped object 1610. The temperature of the process surface 220 is raised by the condensed light, and the process surface 220 is melted, partially forming a molten pool.

The material is ejected from the processing nozzle 200 to a molten pool 221 of the process surface 220. The material is melted into the molten pool 221. After that, the molten pool 221 is cooled and hardened to deposit the material on the process surface 220, implementing three-dimensional shaping.

With the above-described arrangement, the spot position and shape of a powder material can be controlled in accordance with the shape of a molten pool to adjust the powder ejection. The powder material can be efficiently supplied to the molten region.

### [Other Embodiments]

The present invention has been described above with reference to the embodiments. However, the present invention is not limited to those embodiments. Various changes understandable by those skilled in the art within the scope of the present invention can be made for the arrangements and details of the present invention. The present invention also incorporates a system or apparatus that somehow combines different features included in the respective embodiments.

The present invention is applicable to a system including a plurality of devices or a single apparatus. The present invention is also applicable even when an information processing program for implementing the functions of the embodiments is supplied to the system or apparatus directly or from a remote site. Hence, the present invention also incorporates the program installed in a computer to implement the functions of the present invention on the computer, a medium storing the program, and a WWW (World Wide Web) server that causes a user to download the program. Especially, a non-transitory computer readable medium storing a program for causing a computer to execute processing steps included in the above-described embodiments falls within the scope of the present invention.

## Claims

1. A processing nozzle comprising:
a powder ejector that ejects a powder material toward a molten pool formed on a process surface by an energy line; and
an adjuster that adjusts, in accordance with a shape of the molten pool, a shape and/or position of a powder spot formed by said powder ejector.

2. The processing nozzle according to claim 1, wherein said powder ejector includes:
an inner housing that constitutes an energy line path through which the energy line passes; and
an outer housing that is arranged with respect to the inner housing via a gap serving as a channel of the powder material, and
said adjuster adjusts relative positions of the inner housing and outer housing.

3. The processing nozzle according to claim 2, wherein said adjuster adjusts relative horizontal positions of the inner housing and outer housing.

4. The processing nozzle according to claim 1, 2, or 3, wherein said adjuster adjusts the shape and/or position of the powder spot formed by said powder ejector, in accordance with a moving direction of the molten pool on the process surface.

5. The processing nozzle according to any one of claims 1 to 4, further comprising a detector that detects the shape of the molten pool by capturing an image of the process surface.

6. A processing head comprising:
a processing nozzle defined in any one of claims 1 to 5; and
a condensing device that condenses the energy line.

7. A machining apparatus comprising:
a processing head defined in claim 6;
a material supply portion that supplies the powder material to said processing head; and
a controller that controls the processing nozzle and controls a spot diameter of the powder material.

8. A control method of a processing nozzle, comprising:
detecting a shape of the molten pool when performing processing by ejecting a powder material toward a molten pool formed on a process surface by an energy line; and
adjusting, in accordance with the shape of the molten pool, a shape and/or position of a powder spot formed by a powder ejector that ejects the powder material toward the molten pool.

9. A control program of a processing nozzle, causing a computer to execute:
detecting a shape of the molten pool when performing processing by ejecting a powder material toward a molten pool formed on a process surface by an energy line; and
adjusting, in accordance with the shape of the molten pool, a shape and/or position of a powder spot formed by a powder ejector that ejects the powder material toward the molten pool.
